# EUROPEAN PATENT APPLICATION

(11) **EP 2 661 997 A1**
(43) Date of publication of application: **13.11.2013**
(21) Application number: 13165043.4
(22) Date of filing: 24.04.2013
(51) Int. Cl.: A47J 31/40, A47J 47/06

(54) **Infusion powder dispenser for beverage vending machines**

(30) Priority: 08.05.2012 IT MI20120783
(71) Applicant: F.A.S. International S.p.A., 36015 Schio (Vicenza) (IT)
(72) Inventor: Cattaneo, Pietro, 36015 Schio VI (IT)
(74) Representative: Sgobba, Marco

(57) **Abstract**

An infusion powder dispenser for beverage vending machines comprises a housing (2) having an inner cavity (3) for storage of infusion powders; dispensing members (11) adapted to be switched between a dispensing position, in which they are in fluid communication with the environment outside the inner cavity (3), and a rest position in which they are not in fluid communication with the environment outside said inner cavity (3); a plate (6), which is designed to move in the inner cavity (3) and to compress the powders contained in the inner cavity (3). The plate (6) is shaped to conform the inner cavity (3).

## Description

### TECHNICAL FIELD

The present invention relates to an infusion powder dispenser, e.g. for dispensing ground coffee, in beverage vending machines.

### BACKGROUND OF THE INVENTION

Infusion powders are used in vending machines for preparation of beverages to be dispensed upon user's request. A typical example is ground coffee, that is used for preparing espresso. Espresso coffee is a beverage obtained by percolation of pressurized hot water through a layer of ground coffee. As water flows through the ground coffee, its pressure drops and the beverage is dispensed at atmospheric pressure. Due to the particularly fine grinding of roasted coffee, the percolation water encounters such a resistance as to allow extraction of aromatic substances that provide creaminess, flavor, body and aftertaste to the beverage. Freshness of the ground blend is of critical importance, as ground coffee tends to oxidize with time, thereby causing the oily substances contained therein to turn rancid, which will affect cream production and alter taste.

In beverage vending machines the problem of powder oxidation is highly felt, as a large amount of infusion powders shall be provided in the machine as stock, to allow a large number of dispensing operations. Furthermore the temperature and moisture in vending machines are often high, especially when vending machines are installed in non-air-conditioned environments, whereby powder oxidation is further accelerated.

In an attempt to obviate this drawback, a number of solutions have been developed, with the product (e.g. coffee beans) being ground on demand to obtain the infusion powder, i.e. when beverage dispensing is requested. Nevertheless, these solutions have the drawback of requiring a grinder, which will add complexity to the device without completely solving the problem, as the product that still needs grinding is exposed to oxidation.

A different type of solution is given by the use of hermetically sealed capsules or pods, containing a dose of powdered product sufficient for the preparation of a single beverage. The powdered product maintains its organoleptic properties, but this solution adds great complexity to the beverage vending machine, as it requires a system for orderly and reliably loading the individual capsules into the percolation chamber and a system for unloading spent capsules. Also, this kind of solution involves very high operating costs, as the infusion powder needs packaging in individually sealed doses.

In the light of the above described prior art, the technical purpose of the present invention is to provide an infusion powder dispenser for beverage vending machines, that obviates the above drawbacks.

Particularly, the object of the present invention is to provide an infusion powder dispenser for beverage vending machines, that can preserve the organoleptic properties of the infusion powders.

### SUMMARY OF THE INVENTION

According to the present invention, the technical purpose and the intended object are fulfilled by an infusion powder dispenser for beverage vending machines as defined by the features of one or more of the annexed claims.

### BRIEF DESCRIPTION OF THE DRAWINGS

The features and advantages of the invention will appear from the following detailed description of an embodiment, which is illustrated without limitation in the annexed drawings, in which:
- Figure 1 shows a perspective schematic view of an infusion powder dispenser for beverage vending machines according to the present invention;
- Figure 2 is an exploded view of the dispenser of Figure 1, with certain parts omitted to better show other parts; and
- Figures 3 to 5 show a view of certain details of the dispenser of Figure 1 in different operating positions.

### DETAILED DESCRIPTION OF THE INVENTION:

An infusion powder dispenser forbeverage vending machines according to the present invention will be generally designated by numeral 1.

The dispenser 1 of the present invention is adapted to store and dispense infusion product powders for beverage preparation in vending machines. An example of infusion product powder is ground coffee, that is used for preparing espresso.

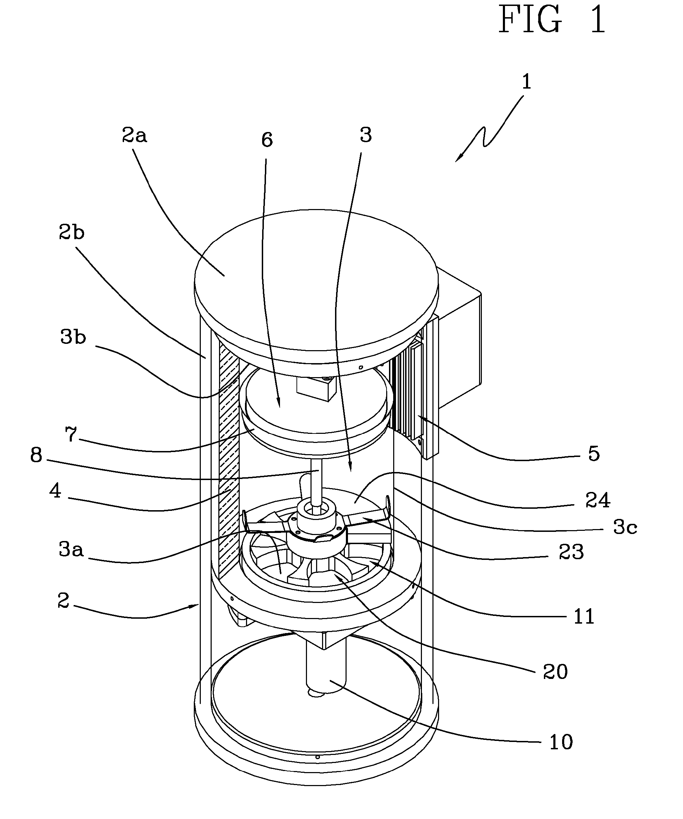

The dispenser 1 comprises a housing 2 having an inner cavity 3 for storage of infusion powders. The inner cavity 3 has the shape of a right prism, which means that it comprises a bottom wall 3a, a top wall 3b and at least one side wall 3c. The top wall 3b is integral with a cover 2a (moving from an open state to a closed state) of the containing body 2, which has the purpose of closing the inner cavity 3. A single side wall 3c is provided if the inner cavity has a cylindrical shape, like in the preferred embodiment as shown in the accompanying figures. In other embodiments, not shown, there may be any number of side walls greater than three, depending on the type of right prism that is selected as a shape of the inner cavity 3. The inner cavity 3 is contained in the containing body 2, which may have any shape adapted to accommodate the inner cavity. In the preferred embodiment of the invention, the containing body 2 also has a cylindrical shape, as shown in the accompanying figures. The cavity 3 is contained in an upper portion of the containing body 2. Devices (as described below) for operating the dispenser 1 are held within a lower portion of the containing body 2. The bottom wall 3a of the inner cavity 3 divides (at least ideally) the upper portion from the lower portion of the containing body 2. Preferably, an insulating material 4 is inserted between the side wall 2b of the containing body 2 and the side wall 3c of the inner cavity 3 (see Figure 1) for thermally insulating the inner cavity 3 from the outside environment. The insulating material 4 is, for instance, expanded or extruded polystyrene or a similar material. Thus, the inner cavity 3 and its contents (infusion powders) are thermally insulated from the outside environment, i.e. from the interior of the vending machine, which will prevent the infusion powders from being heated and being easily oxidized. The insulating material 4 may be also provided at the top wall 3b and/or the bottom wall 3a of the inner cavity 3. In order to further reduce oxidation of infusion powders, the dispenser 1 comprises cooling members 5 (see Figure 1) operating in the containing body 2. Thus, the inner cavity 3 and its contents are maintained at a low temperature, e.g. ranging from 2°C to 15°C, preferably from 2°C to 9°C, more preferably of about 4°C. In the preferred embodiment of the invention, the cooling members 5 are thermoelectric devices composed of many Peltier junctions connected in series, known with the name of Peltier cells. Preferably, the Peltier cells are located in the proximity of the upper portion of the containing body 2.

The dispenser 1 comprises a plate 6 which is movable in the cavity (3) and is designed to compress the powders against the bottom wall 3a of the cavity. As powders are compacted, their volume can be reduced, and the air in the volume occupied by the powders is eliminated or anyway minimized. The reduction of air in the volume occupied by the powders reduces their oxidation, thereby preserving their organoleptic properties. It shall be noted that the plate 6 is shaped to conform the inner cavity 3. Therefore, in the preferred embodiment of the invention the plate 6 has a cylindrical shape. Particularly, the plate 6 is in sliding contact with the side wall 3c of the inner cavity 3, which will prevent the powders from penetrating between the plate 6 and the side wall 3c of the inner cavity 3 during compaction, which would neutralize the compaction effect. Furthermore, in order that good sealing is ensured between the plate 6 and the side wall 3c of the cavity 3, a seal 7 is provided, which contacts the side wall of the cavity. The seal 7 is preferably made of a compliant material. The plate 6 is moved in the cavity by a worm 8 rotated by an electric motor 10. This worm 8 extends through the interior of the cavity 3 from the bottom wall 3a to the top wall 3b. The worm 8 extends along an axis of symmetry of the cavity 3. The electric motor 10 is located outside the cavity 3, and particularly in the lower portion of the containing body 2. Advantageously, a clutch 9 operates between the worm 8 and the motor 10, to release the motor 10 from the worm 8 as soon as a preset torque value is reached. In other words, as the plate 6 is lowered by the rotation of the worm 8 to compact the powders, the torque required from the electric motor 10 increases until it reaches a limit value, after which the clutch operates to disengage the worm 8 from the motor 10 and stop the downward motion of the plate 6. The limit value is preferably preset and depends on the type of powders to be compacted and on the degree of compaction to be achieved.

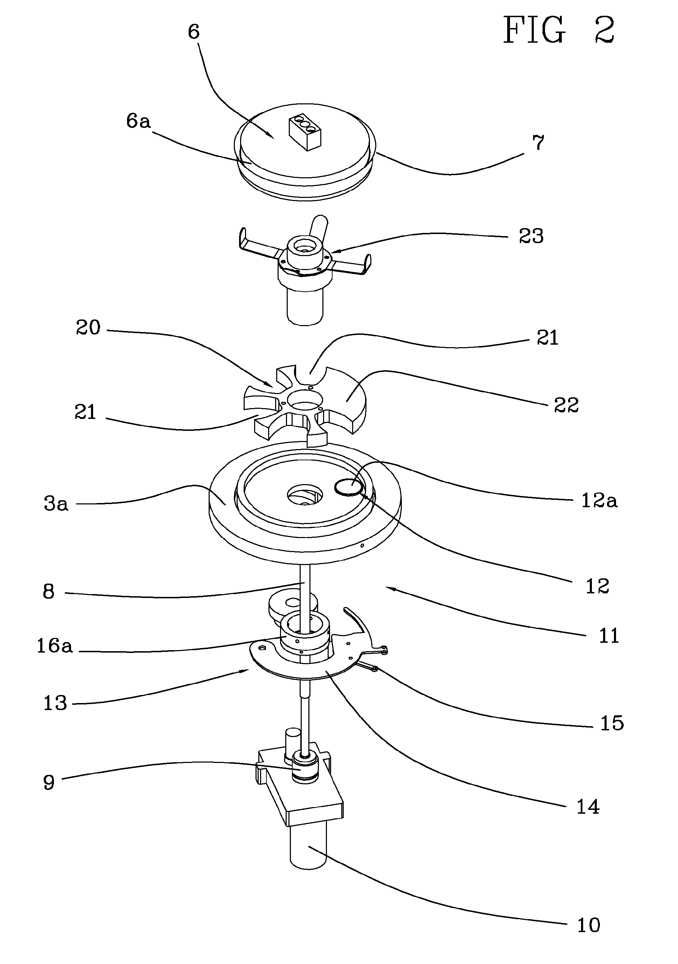

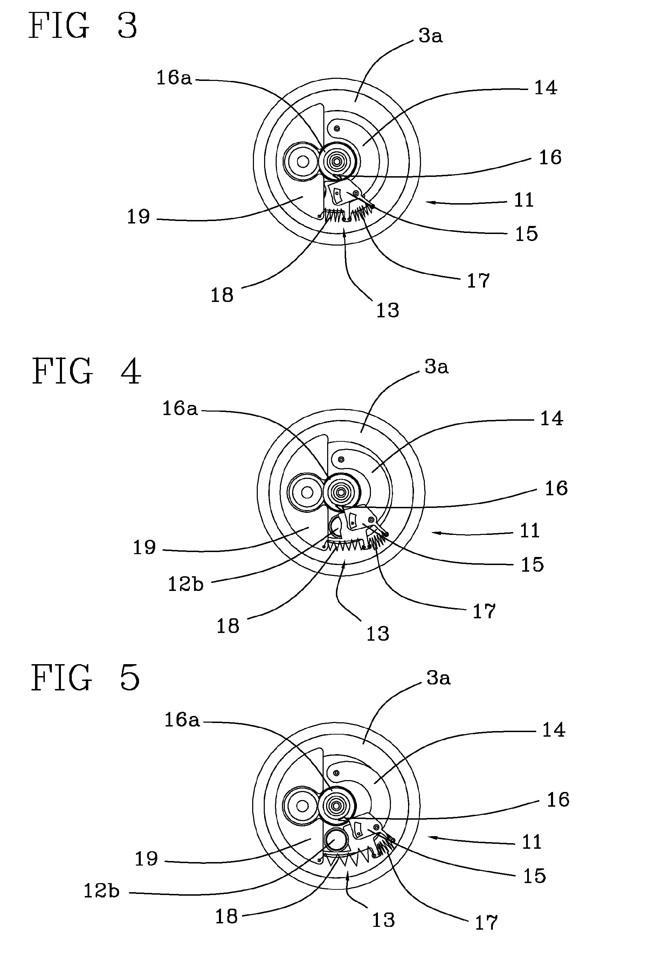

The dispenser 1 also comprises dispensing members 11, that are adapted to be switched between a dispensing position, in which they are in fluid communication with the environment outside the inner cavity 3, and a rest position in which they are not in fluid communication with the environment outside the inner cavity 3. The dispensing members have the purpose of dispensing predetermined amounts of powders to a percolation/mixing chamber of the vending machine, to prepare the beverage selected by a user. The dispensing members 11 comprise a metering chamber 12 having a powder inlet section 12a (see Figure 2) and a powder outlet section 12b (see Figure 5). The metering chamber 12 is placed on the bottom wall 3a of the cavity 3 and extends through the latter, thereby putting the interior of the cavity 3 in fluid communication with the lower portion of the containing body 2. The dispensing members 11 further comprise a first closure element 13, which is designed to move between a position in which it closes the outlet section 12b of the metering chamber 12 and a position in which it opens the outlet section 12b of the metering chamber 12. The first closure element 13 is placed on the bottom wall 3c of the cavity 3 on the side that faces the second portion of the containing body 2. The first closure element 13 is driven by the above mentioned electric motor 10. Particularly, the closure element 13 comprises a plate 14 (see Figures 2 and from 3 to 5), which is hinged below the bottom wall 3c of the cavity 3 and can rotate between a position in which the outlet section 12b of the metering chamber 12 is obstructed and a position in which it is opened. The plate 14 has an arched shape. A rocker arm 15 is operable on the plate 14, and is hinged to the plate on the side opposite to the hinge axis between the plate 14 and the bottom wall 3a of the cavity 3. A shut-off tooth 16 is integral with a bushing 16a that is driven by the motor 10 (via a kinematic chain). The rocker arm 15 and the tooth 16 are part of the first closure element 13. It shall be noted that the worm 8 extends through the bushing 16a to project into the cavity 3. As the bushing 16a rotates, the tooth 16 is designed to mechanically interfere with the rocker arm 15. Particularly referring to Figures 3 to 5, the rocker arm 15 and the plate 14 are shown to be joined by a spring 17, which tends to rotate the rocker arm 15 relative to the plate 14, such that the rocker arm is placed in a position of interference with the tooth 16. When the tooth 16 rotates in a first direction (clockwise in Figures 3 to 5) and intercepts the rocker arm 15, the latter rotates under the action of the tooth 16 and disengages from the tooth itself (see Figure 3). The rotation of the rocker arm 15 is counteracted by the spring 17 such that, when the tooth 16 moves past the rocker arm 15, the latter moves back to the position of interference with the motion of the tooth 16. When the tooth 16 rotates in a second direction, opposite to the first direction (counterclockwise in Figures 3 to 5) and intercepts the rocker arm 15, the latter is pulled by the tooth (see Figure 4), because the rotation of the rocker arm 15 further enhances interference with the tooth 16. As the tooth 16 continues its stroke, the tooth 16 draws along the rocker arm 15, which in turn rotates the plate 14 (see Figure 4) until the rotation of the latter clears the outlet section 12b of the metering chamber 12 (see Figure 5). Still continuing its stroke, the tooth 16 disengages from the rocker arm 15 and the plate 14, and moves back to the closing position under the action of a spring 18.

It shall be noted that the rotation of the motor 10 in the second direction, i.e. the direction in which the metering chamber 12 is opened, is stopped when the rocker arm 15 disengages from the tooth 16 thereby allowing the plate 14 to spring back into the closing position. Furthermore, the return force of the spring 18 that moves the plate 14 back to the closing position causes the plate 14 to bump into a stop 19 that is integral with the bottom plate 3a of the cavity 3. This impact causes the bottom wall 3a to vibrate, thereby allowing any powder still in the metering chamber 12 (e.g. adhering to its walls) to come out of the metering chamber 12 as soon as it is next opened. Also for this reason, for each powder dispensing operation, the outlet section 12b of the metering chamber 12 is opened and closed (as described above) more than once, preferably three times.

It shall be also noted that the direction of rotation of the worm 8 to lower the plate 6 is the above mentioned first direction, i.e. opposite to the second direction (the one for opening the metering chamber 12).

The dispensing members 11 further comprise a metering unit 20 which is designed to move in the inner cavity 3 and to convey powder doses into the metering chamber 12 through the inlet section 12a. The metering unit 20 extends proximate to the bottom wall 3a of the cavity 3 on the side that faces the first portion of the containing body 2. In the preferred embodiment of the invention, the metering unit 20 comprises a plurality of metering volumes 21, which are successively moving toward the metering chamber 12. The metering unit 20 is driven by the motor 10. Particularly, the metering unit 20 is integral with the bushing 16a. It shall be noted that no clutch is provided between the motor 10 and the metering unit 20. The metering unit 20 is formed in a rotating disk, driven by the motor 10. The metering volumes 21 consist of peripheral recesses of the disk and preferably have the same size. The powders in the cavity 3 will fill the metering volumes 21 and the rotation of the disk will carry the powders therein toward the metering chamber 12. When a metering volume intercepts the inlet section 12a of the metering chamber 12, the powders in the metering volume 21 fall into the metering chamber 12. The metering chamber is filled when the disk rotates in the first direction.

The dispensing members 11 also comprise a second closure element 22 operating on the inlet section 12a of the metering chamber 12. The second closure element 22 closes the inlet section 12a of the metering chamber 12 when the first closure element 12 is in its opening position. The second closure element 22 is also formed on the above mentioned disk. Particularly, the second closure element 22 consists of a section of the disk. It shall be noted that the angular extent of the second closure element 22, i.e. the extent of the disk portion that constitutes it, is substantially as wide as the angular stroke of the motor 10 (and hence the bushing 16a) when the latter moves in the second direction to open the metering chamber 12. In other words, the extent of the second closure element 22 allows it to close the inlet section 12a of the metering chamber 12 during actuation of the first closure element 13.

The dispenser 1 further comprises a stirring member 23, which is designed to mix the powders compacted by the plate 6. This stirring member rotates in the cavity 3 and is driven by the motor 10. The stirring member 23 is integral with the bushing 16a. In the preferred embodiment of the invention, the stirring member 23 consists of a plurality of blades rotating about a common axis.

A partition 24 is provided between the stirring member 23 and the second closure element 22. The partition 24 is fixed in the cavity 3 and placed on the vertical of the metering chamber 12.

The above disclosure clearly shows that the dispenser 1 can preserve the organoleptic properties of powders and minimize oxidation thereof.

Those skilled in the art will obviously appreciate that a number of changes and variants may be made to the arrangements as described hereinbefore to meet incidental and specific needs. All of these variants and changes fall within scope of the invention, as defined in the following claims.

## Claims

1. An infusion powder dispenser for beverage vending machines, comprising: a housing (2) having an inner cavity (3) for storage of infusion powders; dispensing members (11) adapted to be switched between a dispensing position, in which they are in fluid communication with the environment outside the inner cavity (3), and a rest position in which they are not in fluid communication with the environment outside said inner cavity (3); a plate (6), which is designed to be movable in said inner cavity (3) and to compress the powders contained in the inner cavity (3); said plate (6) being shaped to conform to the inner cavity (3).

2. A dispenser as claimed in claim 1, wherein said inner cavity (3) has the shape of a right prism and comprises at least one side wall (3c) and one bottom wall (3a); said plate (6) being in sliding contact with said side wall (3c) of the inner cavity (3).

3. A dispenser as claimed in claim 2, wherein said plate (6) has a seal (7) on a peripheral edge (6a) thereof; said seal (7) contacting said side wall (3c) of the inner cavity (3).

4. A dispenser as claimed in claim 2 or 3, wherein said dispensing members (11) include a metering chamber (12), having a powder inlet section (12a) and a powder outlet section (12b) located on the bottom wall (3a) of said inner cavity (3); said dispensing members (11) further comprising a first closure element (13) which is designed to be movable between a position in which it closes the outlet section (12b) of the metering chamber (12) and a position in which it opens the outlet section (12b) of the metering chamber (12).

5. A dispenser as claimed in claim 4, wherein said dispensing members (11) include e metering unit (20) which is designed to be movable in the inner cavity (3) and to convey powder doses into the metering chamber (12) through said inlet section (12a).

6. A dispenser as claimed in claim 4 or 5, wherein said dispensing members (11) include a second closure element (22) operating on the inlet section (12a) of the metering chamber (12), said second closure element (22) closing the inlet section (12a) of the metering chamber (12) when the first closure member (13) is in its opening position.

7. A dispenser as claimed in claims 5 and 6, said metering unit (20) and said second closure element (22) being formed on a common disk, rotating in the cavity (3) for alternately presenting the metering unit (20) or the second closure element (22) to said inlet section (12a) of the metering chamber (12).

8. A dispenser as claimed in any preceding claim, wherein said plate (6) is engaged by a worm (8) rotatably driven by an electric motor (10); a clutch (9) operating between said worm (8) and said motor (10) to release the motor (10) from the worm (8) as soon as a preset torque value is reached.

9. A dispenser as claimed in claims 7 and 8, wherein said disk is rotatably driven by said electric motor (10); said clutch (9) not operating between said electric motor (10) and said disk.

10. A vending machine comprising at least one infusion powder dispenser (1) as claimed in one or more of the preceding claims.
